Europäisches Patentamt

European Patent Office

Office européen des brevets

(19)

(11) EP 1 083 508 A2

(12) EUROPEAN PATENT APPLICATION

(43) Date of publication:
14.03.2001 Bulletin 2001/11

(51) Int Cl.$^7$: G06F 17/60

(21) Application number: 00307796.3

(22) Date of filing: 08.09.2000

(84) Designated Contracting States:
AT BE CH CY DE DK ES FI FR GB GR IE IT LI LU
MC NL PT SE
Designated Extension States:
AL LT LV MK RO SI

(30) Priority: 08.09.1999 GB 9921231

(71) Applicant: Sony United Kingdom Limited
Weybridge, Surrey KT13 0XW (GB)

(72) Inventor: Zhou, Yiming
Union City, CA 94587 (US)

(74) Representative: Turner, James Arthur et al
D. Young & Co.,
21 New Fetter Lane
London EC4A 1DA (GB)

(54) Artificial intelligence user profiling

(57) A system for and method of automatically selecting among a plurality of alternative modes of an activity. A user behaviour knowledge base (30) is provided for holding a number of user profiles, one for each registered user. The user behaviour knowledge base comprises a plurality of given fact evidential logic rules with associated fuzzy sets and weights personalised to each user to form the user profiles. The user behaviour knowledge base is operable to select for any user one among the plurality of alternative modes of activity by applying the given fact evidential logic rules held in that user's user profile. The user behaviour knowledge base is continually refined using a common sense knowledge base (40) comprising a plurality of common sense evidential logic rules with associated fuzzy sets and weights. The common sense evidential logic rules respond to activity data and the user identifier to output common sense support values which, in use, are continually applied to modify the user profile of the currently active user by adjusting the fuzzy sets and/or the weights held in that user's profile for the given fact evidential logic rules. The user profiles are thus personalised by monitoring of each user's activity.

FIG. 2

EP 1 083 508 A2

**Description**

The invention relates to an apparatus for and method of profiling user activity so as to predict future user activity.

User behaviour becomes a very important issue, if not the most important issue, as the digital era comes. For example, broadcasters of a variety of media have to supply materials the users enjoy most in order to gain market shares and to save resources when interactive TV becomes a reality. Service providers have to provide services at the right time and right place for the right user. The information technology revolution results in ever increasing multiplication of choice for viewers and other users, which presents its own problems. All of these are user behaviour related problems. To know the user is the ultimate goal for all competitors, not only in the broadcasting field, but in diverse areas of commerce and leisure activities. One example of another area of commerce is of shopping. Loyalty cards allow the compilation of customer purchase data in a supermarket or other store. In principle, this is raw data from which valuable user profiles can be built up. Prediction of future customer purchases would for example be a valuable tool in stock control.

Analysis of, and then taking actions upon, data compiled from user activity can be straightforward, since many user choices are easy to make in that they follow directly and logically from knowledge of the relevant facts. Such choices are easily predictable. On the other hand, many user activities involve choices which are not easy to rationalise in terms of simple logic. Choices of this kind are less easy to predict. Each individual has their own likes and dislikes, habits, creativity and motivation which collectively may all contribute in a complex way to decision making. What determines whether a person chooses to view a new movie available on TV? Having decided to watch the new movie, what determines if that person then enjoys watching it? In another field, what determines whether a person will buy a new brand of soft drink available in the food store?

If the answers to such questions could be predicted with some reliability, this would be highly valuable, since action could be taken following the predictions.

According to a first aspect of the invention there is provided a system for automatically selecting among a plurality of alternative modes of an activity. The system comprises an activity monitor input for receiving activity data characteristic of the activity and a user identifier input for defining which user is associated with current activity. An artificial intelligence engine comprising a predictive, user behaviour knowledge base holds a number of user profiles for the users of the system. The user profiles are defined by a set of evidential logic rules, referred to as given fact evidential logic rules in the following. The given fact evidential logic rules have associated fuzzy sets and weights personalised to each user to form the user profiles. The user behaviour knowledge base is operable in a predictive capacity to select for any user one among the plurality of alternative modes of activity by applying the given fact evidential logic rules held in the user profile of that user. In a preferred embodiment, the selection is made having regard to which alternative modes are currently available, as measured from the current activity data.

The system preferably comprises a further knowledge base, referred to as the common sense knowledge base in the following, this further knowledge base having the function of refining the user behaviour knowledge base. The common sense knowledge base also has associated evidential logic rules with fuzzy sets and weights. The common sense evidential logic rules are operable in response to activity data and the user identifier to output common sense support values which, in use, are continually applied to modify the user profile of the currently active user by adjusting the fuzzy sets and/or the weights held in that user's profile for the given fact evidential logic rules, thereby to personalise the user profiles responsive to monitoring of each user's activity. In a preferred embodiment of the invention, the common sense fuzzy sets and weights are generic to all users and the common sense weights are fixed in use. In a preferred embodiment, the common sense evidential logic rules are configured to provide a measure of the current liking of the activity by the participating user.

One application of the system is for automatically selecting among a plurality of alternative TV channels, the activity data then being a multi-channel television signal. In this application, the user behaviour knowledge base can select for any user one among the plurality of TV channels by applying the given fact evidential logic rules held in the user profile of that user. Moreover, the common sense knowledge base is used to refine the given fact fuzzy sets and weights on the basis of monitoring the viewing habits of individual users. Users can log on to provide their user identifier by way of a television remote control, for example.

Further applications for the artificial intelligence engine are also envisaged, for example, for automatic selection among a plurality of alternative data files, in a search engine or as part of a web browser for automatically selecting web sites of interest.

According to a second aspect of the invention there is provided a method of predicting user activity, the method comprising: measuring a user activity to provide user activity data; defining a plurality of given fact evidential logic rules with associated fuzzy sets and weights; and applying the given fact evidential logic rules to output given fact support values for predicting or selecting future user activity.

To enhance prediction performance, the method of the second aspect preferably further comprises: defining a plurality of common sense evidential logic rules with associated fuzzy sets and weights; applying the common sense evidential logic rules to the user activity data to output common sense support values; and adjusting the fuzzy sets and/or the weights of the given fact evidential logic rules according to the common sense support values output from the common sense evidential logic rules.

The given fact fuzzy sets are preferably initialised with maximum entropy and the common sense fuzzy sets are initialised with semantic meaning. Moreover, the weights associated with the given fact fuzzy sets are preferably recalculated from time to time, either synchronously or asynchronously, according to entropy distribution, whereas the weights associated with the common sense fuzzy sets are kept fixed.

The given fact evidential logic rules are preferably of a lower level of abstraction in that they follow from facts directly inferable from the user activity data, whereas the common sense evidential logic rules are preferably of a higher level of abstraction in that they drawn from a secondary analysis of users' subjective attitude to the activity. The secondary analysis may include statistics, psychology, social behaviour and/or expert opinion, for example. The common sense evidential logic rules may serve to quantify a user's current liking of the activity.

The method of the second aspect of the invention is capable of implementing the same applications as the above-described system of the first aspect of the invention.

For a better understanding of the invention and to show how the same may be carried into effect reference is now made by way of example to the accompanying drawings in which:

Figure 1 is a schematic overview of an embodiment of the invention including an artificial intelligence engine;
Figure 2 shows the artificial intelligence engine of Figure 1 in more detail;
Figure 3 shows a fuzzy set of "The more viewer watches the more viewer probably likes it" in the case Sw = Sp, used in the artificial intelligence engine of Figure 1;
Figure 4 shows a fuzzy set of "The viewer enjoyed the program within watching period" in the case that Sw < Sp;
Figure 5 shows a fuzzy set of "The viewer enjoys this program" in the case that the viewer watched more than one program;
Figure 6 shows a fuzzy set of "The viewer enjoys this program when the viewer watched much of it";
Figure 7 shows a distributed system comprising networked computer stations hosting the artificial intelligence engine;
Figure 8 shows internal structure of one of the stations of Figure 7; and
Figure 9 shows results for learning/predicting 660 viewers' viewing habits in a test example.
Figure 10 shows an application of the artificial intelligence engine in a home system application including a television and video recorder unit, the artificial intelligence engine being used for automatic program selection and video recorder setting;
Figure 11 shows a conventional operational mode of the system of Figure 10;
Figure 12 shows an AUTO-VIEW mode for automatic program selection in the system of Figure 10;
Figure 13 shows an AUTO-VCR mode for automatic video recorder setting in the system of Figure 10;
Figure 14 shows a virtual record store application of the artificial intelligence engine; and
Figure 15 shows a web browser application of the artificial intelligence engine.

## 1. Detailed Description

### 1.1 System Overview

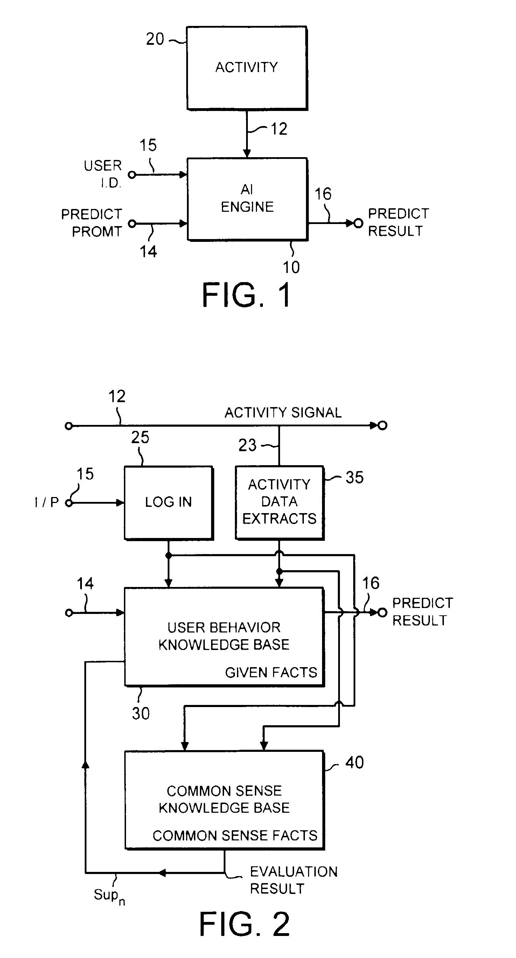

Figure 1 is a schematic diagram of an artificial intelligence (AI) engine 10 which has an input for receiving an activity signal 12 derived from measurement of an activity 20. The utility of the AI engine 10 is that it learns how better to predict future activity on the basis of analysis of the activity signal 12 for each user, the users being identified by a user identifier (i.d.) signal 15 supplied as an input to the AI engine 10. The AI engine 10 can be prompted by a predict prompt input 14 to output a prediction result 16.

Figure 2 shows the AI engine 10 in more detail. As mentioned above, the activity is characterised by the activity signal 12, which may for example be a television (TV) signal. An activity monitor or attribute extraction unit 35 is arranged to tap or snoop the activity signal 12 through a data path 23. The activity attribute extraction unit 35 extracts activity data from the activity signal and outputs the activity data to each of two knowledge bases 30 and 40 which form the heart of the AI engine. Current activity is also associated with a specific user who is identified by a user i.d. supplied externally to the AI engine through a user identifier or login unit 25. For example, the user may be a viewer or watcher of a TV and the login process may be performed through a remote control unit. The two knowledge bases 30 and 40 are a user behaviour knowledge base 30 and a common sense knowledge base 40. Although this is described in great detail further below, the role of the user behaviour knowledge base 30 is to implement prediction of future user activity, and the role of the common sense knowledge base 40 is to refine the performance of the user behaviour knowledge base 30. The refinement is implemented by monitoring each user's activities, drawing conclusions from this monitoring and using the conclusions to adjust parameters in the user behaviour knowledge base 30 through a feedback line 45.

The user behaviour knowledge base 30 holds a number of user profiles, for example in a memory or non-volatile readable and writable medium. A user profile is maintain for each of the individual users. The user behaviour knowledge base 30 is built on given fact evidential logic rules (ELRs) with associated fuzzy sets and weights. The fuzzy sets or the weights, or both, can be personalised to each user, so that the user profiles for the different users will generally be different. The user behaviour knowledge base 30 is operable in its predictive capacity to select, for the currently logged-in user, one among a plurality of alternative modes of the activity. The activity signal 12 may include a large number of modes, all transmitted simultaneously. For example the activity signal 12 may be a TV signal carrying a number of different TV channels. The mode selection is performed by applying the given fact evidential logic rules using the personalised variable operands held in the user profile of that user.

The common sense knowledge base 40 comprises a plurality of common sense evidential logic rules with associated fuzzy sets and weights. The common sense evidential logic rules are operable, in response to the activity data, received from the activity monitor unit 35, and the user identifier, received from the login unit 25, to output common sense support values $Sup_n$. These support values are fed-back through data path 45 to modify the user profile of the currently active user by adjusting the fuzzy sets and/or the weights held in that user's profile for the given fact evidential logic rules. The user profiles are thus personalised responsive to the monitoring of each user's activity by the common sense knowledge base 40.

The AI engine thus has a two tier structure. The user behaviour knowledge base 30 operates with given fact evidential logic rules that follow from facts directly inferable from the user activity data, whereas the common sense knowledge base operates with evidential logic rules that are drawn from a secondary analysis of users' *subjective* attitudes to the activity. The secondary analysis may include statistics, psychology, social behaviour or expert opinion, for example. The common sense evidential logic rules are set to measure user behaviour at a higher, subjective level, for example to provide a measure of emotions such as like and dislike in respect of the activity modes.

1. AI Engine Overview

An artificial intelligence (AI) engine is now described that uses fuzzy Evidential Logic Rules (ELRs) based on Fril for capturing, analysing and querying user profiles of TV watching habits. Fril is described in the text "Fril-Fuzzy and Evidential Reasoning in Artificial Intelligence", J.F Baldwin, T.P. Martin, B.W. Pilsworth, Research Studies Press Ltd., John Wiley & Son , Inc. 1995.

User behaviour is defined by fuzzy rules accompanied by fuzzy sets, such as "his/her favourite TV station" with a fuzzy set to describe the station, and weights, such as "description of program content is more important than TV station for him/her", which can then be fed into the ELR of Fril. The fuzzy sets and weights serve as variables which are modified in a learning process. They will initially have setting that are universal for everyone. After the learning process, they will be personalised for individual users as the user's profile. (Alternatively the initial settings may be set according to user parameters such as age, sex, address and occupation).

Since most applications are network based nowadays, a Distributed AI Service Provider (DAISP) will be beneficial for both broadcasters and service providers. A prototype of DAISP based on fuzzy logic and ELR has been built and tested, and is described further below. It is important to note that the network support layer of DAISP is not limited to use with the present embodiment. It can be used as a generic task distribution layer to distribute <u>any</u> real-time computation task over a network.

The data used to test the system architecture comes from the Broadcasters' Audience Research Board (BARB), this data being referred to as the BARB data in the following. The BARB data provides a comprehensive day-to-day TV viewing record for a group of representable users and brief TV program listings in the United Kingdom, and is available from "BARB 1991 Service Format for Panel Viewing Data File". March 1997, AGB Television, Westgate, London W5 1UA.. It will be understood that if the invention is embodied in, or for use with, a TV set, for example as part of a set-top box, the equivalent data will be logged from a user's viewing habits.

The main points discussed below are: (1) the variables the BARB data file provides; (2) considerations of what constitutes evidence that a user likes a program; (3) rules which simulate these items of evidence; (4) transformation from evidence to fuzzy sets; (5) application of ELRs (Evidential Logic Rules) to the fuzzy rules, fuzzy sets and weights; and (6) the so-called "chorus" distributed system architecture for DAISP.

2. Facts Provided

The BARB data provides actual viewing facts, which can be taken into account for building fuzzy rules. The facts can be divided into two categories, one direct, another derived.

2.1. Direct Facts

The following facts can be obtained directly by interpreting the BARB data from week 1536 to week 1562, which is the period from 28 December 1997 to 3 July 1998. The BARB data files consist of records which have fixed length. Three types of information are available, namely: (1) user information, such as age group, occupation, area of residence, etc; (2) all valid user watching sessions,; and (3) program information for all stations.

The data on the user watching sessions includes data on (a) day of the week, (b) start time of the session, (c) duration of the session, and (d) station IDs of the stations the user watched in the session.

The data on program information for all stations includes data on (a) title of a program; (b) start time/day of the program; (c) duration of the program; and (d) genre code of the program.

2.2. Derived Facts

The following statistical evidence can be derived from above facts.

1. What were the days in a week the user always watched TV.
2. What was the time the user often started his/her watching session.
3. What was the time difference between when the user started to watch TV and when a program started. i.e. $\Delta$ Start = Start of Watch - Start of Program.
4. Normally, how long, in terms of percentage against the length of the program, the user stayed in a program.
5. How often did the user watch certain types of programs in terms of genre code.

3. Likingness

The word Likingness is used here as a variable name for a variable used to measure both "liking" such as a user likes a program to some extent, and "likeness" such as program A is similar to program B to some extent, *likingness* $\in [0, 1]$. It can also be used to measure a person's preference on elements in a set, such as TV programs on Monday lunch time. If *likingness*=0, the viewer dislikes the program *absolutely.* If *likingness*=1, the viewer likes the program *completely.*

The following analysis is used for judging whether a program is to a user's taste or not. It is stated in a manner such that fuzzy rules can be drawn from them.

(1) If a program was watched from the beginning to the end, Nothing more nothing less (a reasonable delta in time is allowed), the user enjoyed it **particularly**.
(2) If a program was watched from the beginning, and up to more than 90%, the user enjoyed it **very much.**
(3) If a program was watched from the beginning, and up to more than 50%, the user **enjoyed** it.
(4) If a program, which was within the beginning and end of watching time, was watched, the user enjoyed it **probably**.
(5) If a program, which started after the beginning of watching time, was watched for more than 90%, the user enjoyed it **very much**.
(6) If a program, which started after the beginning of watching time, was watched for more than 50%, the user **enjoyed** it.
(7) If the user kept watching the same title day after day, he enjoyed the program **particularly**.
(8) If the user always watched a channel at a certain time, he enjoyed the program **particularly**.

Of course many variations on these definitions can be contemplated for other embodiments.

4. Given Facts and Common Sense

Before introducing the ELRs, the concepts of "given facts" and "common sense facts" in the analysis are described. A user profile is made of "given facts". The "common sense facts" are used to evaluate all watching sessions a user had and the result is used to update the user profile.

There are two sets of ELRs. One set of ELRs is for given facts, originally obtained from BARB data. Initially, this set consists of maximum entropy fuzzy sets, weights and ELR rules. It covers things like program genre code, station, starting time, duration, days of the watching session, etc. That is these ELRs relate to things that can be obtained from BARB data without extra interpretation. Another set of ELRs is for common sense facts such as those listed in the last section. Some of the rules of common sense can be drawn based on statistics, some psychology, some by analogy on people's social belief and behaviour, some by expert opinion, etc..

In the process of learning, all of the fuzzy sets associated with given facts are changed to follow what the user did in his watching sessions. When the fuzzy sets are updated, the weight set is assigned new values according to the entropies the fuzzy sets have, i.e. the weight set is the function of information usefulness measurement of the corresponding fuzzy sets (see for example "A Mathematical Theory of Evidence", 1976, Shafer G., Princeton University Press). At the end of the learning process, the given facts become the user's profile.

The ELR set of common sense facts will start with common sense assigned fuzzy sets which are discussed further below. These have semantic meaning to start with. Hence, the difference between fuzzy sets for common sense facts and fuzzy sets for given facts is that the entropy of the former is not maximal in the beginning.

In use, the weight set of the given facts fuzzy sets will be calculated on line, whenever they are needed, according to the entropy distribution of those fuzzy sets. In the progress of learning, those fuzzy sets belonging to the common sense facts will be kept fixed and weights will be maintained according to usefulness, i.e. the entropy of the corresponding fuzzy sets (see for example the above-referenced text by Shafer).

One could think of "ELRs of given facts" as being a jury to give a judgement on whether a program is to the user's taste or not in terms of a *likingness* value. While ELR of common sense facts serves as witnesses who provide evidence for the jury. i.e. its task is to influence jury's judgement in the outcome of its verdict.

The given facts are formed by the following discrete fuzzy sets in the Fril-based system.

1. The user's *favourite* station. The elements are all available station IDs.

2. The user's *favourite* program genre code. The elements are all available genre codes.

3. The user *normally* watches TV on the day. The elements are the 7 days of a week.

4. The user *usually* watches TV at the time. The elements are time in a day in a 10 minutes interval.

5. The *frequently* used keywords appearing in the program's linguistic descriptions. The elements are those words.

6. The degree of linguistic *similarity* of the words, i.e. the degree of synonymousness of different words carrying similar linguistic meaning. The elements are the words.

The items of evidence here are based upon the programs the user has watched before and the behaviour of the user in the watching session.

The behaviour can be translated and then evaluated by the common sense facts ELRs. The evaluation result will be reflected in the fuzzy sets and weight set of the given facts ELRs, which will be used as the user's profile. That is the learning process. The test process is done by feeding the given fact ELR with given fact program information. Each of the programs will be assigned a "likingness" value based on the result of the given fact ELR.

5. Degree of "likingness"

In this section, the fuzzy sets concerned with common sense facts are further described. Some further quantification of the guidelines mentioned above is made showing how fuzzy sets can be derived and fuzzy rules established.

If a user watches a program, the degree that he likes it, i.e. the "likingness" value can be estimated by: (1) the duration he/she stays watching it; (2) how much he/she actually watched it; (3) what he/she did before and after watching it; and (4) how often he/she watched this sort of program in the past.

If the user watched more than one program in one watching session, there should be a likingness distribution among those programs.

The following is a discussion of how to infer "likingness" from the data. If a program is given as the one the user watches at a certain time, the key parameters analysed are: (1) the start time of the program, $S_p$; (2) the duration of the program, $D_p$; (3) the start time of the watching session, $S_w$; and (4) the duration of the watching session, $D_w$. These key parameters are analysed to draw conclusions about whether a user likes the program or not. The usual delta should be allowed to take account of normal viewing practices.

The relationship between the respective starting times, $S_w$ and $S_p$, is classified into three groups:

$$S_w = S_p$$

$$S_w > S_p \tag{1}$$

$$Sw < Sp$$

The three conditions are interpreted differently regarding the "likingness" and are now each discussed separately.

### 5.1 Sw = Sp

This is the situation "the user probably switched on TV on time for a program he particularly likes". How long he stayed watching the program in relation to the length of the program, i.e.

$$Dw/Dp \hspace{4cm} (2)$$

is the key evidence used to judge whether he likes the program or not. The following rules are used to make the judgement. Please pay attention on the degree of the likingness.

1. He enjoyed it **particularly** if he watched exactly the program, e.g. $Dw = Dp$.

2. He enjoyed it **very much** if he watched more than this program, e.g. $Dw > Dp$.

3. He enjoyed it **probably very much** if he watched most of the program, e.g. $Dw/Dp > 80\%$.

4. He **enjoyed** it if he watched nearly half of the program.

5. He **probably enjoyed** it if he watched some of the program, e.g. $0.5 > Dw/Dp > 0.3$.

6. He **probably** disliked the program if he watched a little of the program, e.g. $Dw/Dp<0.3$.

7. He dislikes the program if he watched **little** of the program, e.g. $Dw/Dp<0.1$.

8. He dislikes the program **particularly** if he switched straightaway.

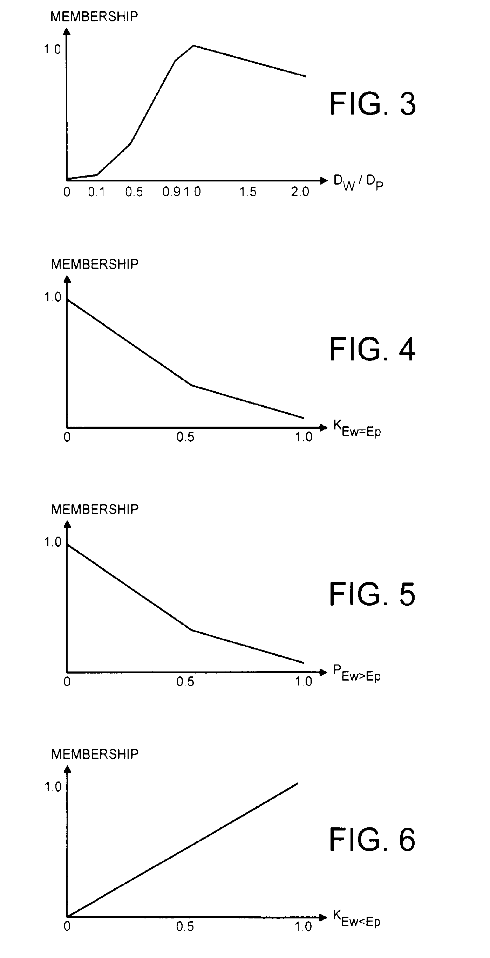

Figure 3 illustrates schematically a fuzzy set defined to reflect the above ambiguous rules about *"the more viewer watches the more viewer probably likes it"*.

### 5.2. Sw < Sp

This is the situation for a program that started after the user started the watching session. The comparison of watch-duration and program-duration doesn't have as much dominant meaning as in the case of $Sw = Sp$.
If Ew is used to denote the end time of the watching session and Ep to denote the end of the program, three possible outcomes can arise.

$$Ew = Ep$$

$$Ew > Ep \hspace{4cm} (3)$$

$$Ew < Ep$$

In the first case, $Ew = Ep$, the whole program was watched. Since the user switched off the watching session at the time the program ended, it can be inferred that the user enjoyed the program. How much the user enjoyed the program could be determined by how long the user (viewer) waited for the program, i.e. $\Delta(Sw, Sp)$ and Dp. If the viewer watched the program soon after the viewer started his watching session, the program is to his taste. On the other hand, if the program started long after the watching session started, the viewer probably just watched it and let the time pass by, i.e. his interest in the program was less. Let $K_{Ew=Ep}$ be the measurement of the activity.

$$K_{Ew=Ep} = (Sp - Sw)/Dp \qquad (4)$$

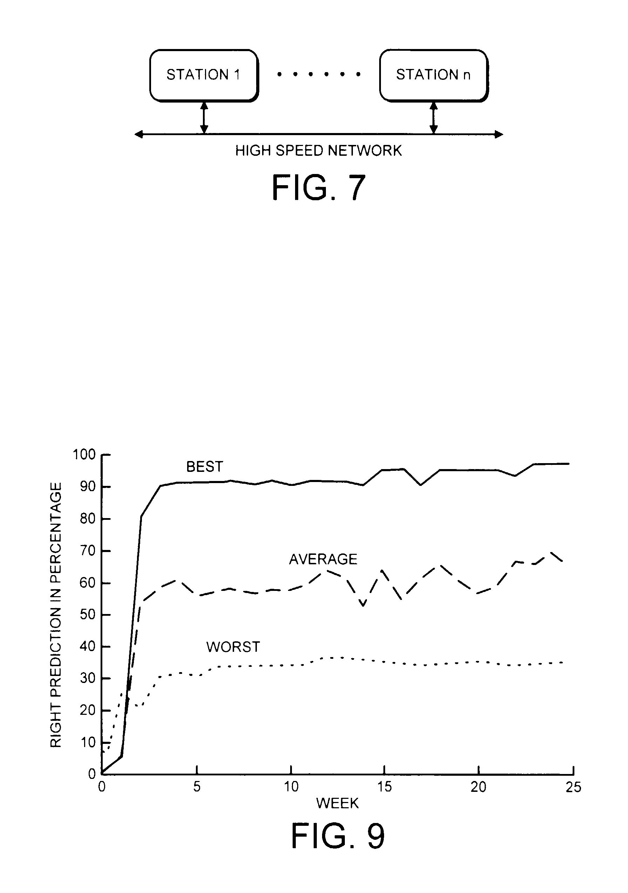

The smaller $K_{Ew=Ep}$ is, the higher the likingness, which can again be expressed in a fuzzy set, as shown in Figure 4 which illustrates a fuzzy set according to the proposition *"He enjoyed the program within watching period"* for the case Sw < Sp.

In the second case, Ew > Ep, the user turned off after the program finished and the viewer did watch the whole program. Moreover, the viewer watched more than one program in this watching period. What attitude the viewer had towards the following programs are evidences of whether the user likes the program more than the following programs or not. For example, if the viewer didn't finish 1/10 of the following program, the viewer enjoyed this one more than the following one. Therefore, both Equation 2 and Equation 4 can play their parts for determining the likingness. The bigger value the value that Equation 2 has (> 1), the less interest the user had towards this program since the user spent a smaller amount of his watching session on the program. On the other hand, the smaller the value of Equation 4, the higher is the possibility that the user switched on the watching session for watching this program. A formula (namely Equation 5 below) can be used to measure the facts in terms of "likingness". The corresponding fuzzy set is shown in Figure 5 which reflects the proposition *"The viewer enjoys this program"* in the case that the viewer watched more than this one program.

$$P_{Ew>Ep} = (Sp - Sw) * Dw/Dp^2 \qquad (5)$$

In the third case, Ew < Ep, the user switched before the end of the program. Whether the viewer liked the program depends largely on how much the viewer had missed, i.e.

$$M_{Ew<Ep} = (Ep - Ew)/Dp \qquad (6)$$

The smaller the value of $M_{Ew<Ep}$, the higher the enjoyment that the user derived from the program. A fuzzy set similar to that shown in Figure 5 can be used.

<u>5.3. Sw > Sp</u>

This is the situation in which the user started his watching session after the program had started. The three situations listed in Equation 3 can arise.

In the first case, Ew = Ep, the user watched part of the program. Again, the more he watched, the more the viewer probably liked it. So, Equation 2 can be used to determine the likingness using the fuzzy set of Figure 3.

In the second case, Ew > Ep, whether the viewer liked the program or not depends largely on how much the viewer has missed in the beginning ((Sw - Sp)/Dp) of the program, which is the smaller the better, and how much the viewer actually watched this program ((Dw -(Ew - Ep))/Dp), which is the bigger the better, i.e.

$$Q_{Ew>Ep} = (Sw - Sp)/(Dw - (Ew - Ep)) \qquad (7)$$

A fuzzy set similar to that of Figure 5 can be used.

In the third case, Ew < Ep, the viewer did not finished the program. Whether the viewer liked it or not can be judged by:

$$N_{Ew<Ep} = Dw/Dp \qquad (8)$$

The bigger the value of $N_{Ew<Ep}$, the more the user enjoyed the program.

Figure 6 shows a typical fuzzy set for it, reflecting the proposition: *"The viewer enjoys this program when the viewer watched much of it. "*

<u>6. Evidential Logic Rules (ELRs)</u>

The ELR is one of the built in fuzzy inference rules of Fril. It is based on probability, fuzzy logic, uncertainty theory and mass assignment, as described in the above-referenced text on Fril by Baldwin *et al*. The variables of an ELR are fuzzy sets and weights representing knowledge in the domain in question and the facts about the query.

The output of an ELR is a number representing the support for the answer of the query. The following is an example syntax of an ELR predicate for getting a "likingness" value about a TV program for a user.

$$((\text{The\_User\_Likes\_Program } \mathbf{X})$$
$$(\text{Program X is broadcast by } \textit{Favourite\_Station}) : W1$$
$$(\text{Program X has } \textit{Favourite\_Genre\_Code}) : W2$$
$$(\text{Program X is on } \textit{Favourite\_Watch\_Time}) : W3$$
$$(\text{Program X is on } \textit{Favourite\_Watch\_Day}) : W4$$
$$(\text{Program X has many } \textit{Similar\_description\_words}) : W5$$
$$. . )$$

where *Favourite_Station, Favourite_Genre_Code, Favourite_Watch_Time, Favourite_Watch_Day, Similar_description_words* are fuzzy sets of Given Facts i.e. they are items of evidence about the user's viewing behaviour. W1, W2, W3, W4, W5 are weights for individual rules.

A fuzzy set in this case is a discrete fuzzy set. For example, fuzzy set Favourite Station can be the following, where the membership is a number in [0,1], i.e. membership $\in$ [0,1]:

```
BBC1=0.1
BBC2=0.3
ITV=0.4
CH4=0.5
SKY1=0.3
SKYSPORT=0.7
SKYMOVIE=0.9 .......
```

From this fuzzy set, it can be seen that the user regards SKYMOVIE as the most favourite station and BBC I as the least.

When the predicate is called with a given program as **X**, a number, known as *support* will be returned. The *support* is what is termed above as *likingness* regarding the program.

### 7. Updating Given Fact Fuzzy Sets

When a likingness support, i.e. predictive output value, is obtained from above analysis using common sense facts (see Fril text Baldwin *et al*). The support (values) are used to update fuzzy sets in the given fact ELRs. Fuzzy sets of given facts are used to give likingness support values when needed.

The likingness support values for the programs the user watched will be used to increment those membership values of corresponding items in the fuzzy sets of given facts. The support values for programs, which were available during the watching session but the user didn't watch, will be used to decrement the membership value of the corresponding items.

It is now considered what variables should be used to decide the amount of the adjustment for the membership values. The following is a list of the variables.

(1) The likingness support obtained using ELR of common sense facts.
(2) The original membership value of the item to be adjusted.
(3) The weight of the fuzzy set, i.e. the overall contribution when a likingness value is calculated.

The following formula can be used to make adjustment to membership value $M^i_{n+l}$ of an element i. When a program was watched:

###### *INSERT* ###########                    (9)

When a program is not watched, the following formula is used:

$$\#\#\#\#\#\# \ INSERT \ \#\#\#\#\#\#\#\#\#\#\#\# \tag{10}$$

where $Sup_n$ is the *likingness* support.

## 8. Chorus Distributed System Architecture

Since most applications should be network based nowadays, a Distributed AI Service Provider (DAISP) will be beneficial for both broadcasters and service providers.

The basic idea of DAISP is to make use of all available computer power in a networked environment and not to affect local users' activities. Distribution should be done whenever and wherever needed in a straight forward, effective, and simple way.

The DAISP is a normal user level application. It does NOT require anything special from an existing operating system. In a Unix situation, it will run as long as the user has a valid account. In the Microsoft NT case, it will run on a normal NT workstation and it does not require special libraries apart from the *Winsock.dll* which is needed for networking under NT.

Figure 7 shows a computer network comprising a plurality of Stations 1, 2,... n interconnected by a communication link. It is not a client/server architecture. There is no central server for the service so that there is no single point failure in the system. It is a network where individuals serve others and themselves if necessary. Sometimes, the stations work together to produce harmonious performance that is where the name chorus comes from. Individuals use the network as a stage to play on, to serve others, and to communicate/monitoring. It is possible for a station not to provide any service to others. In this case, it is a customer/listener only station. However, it is a part of the architecture.

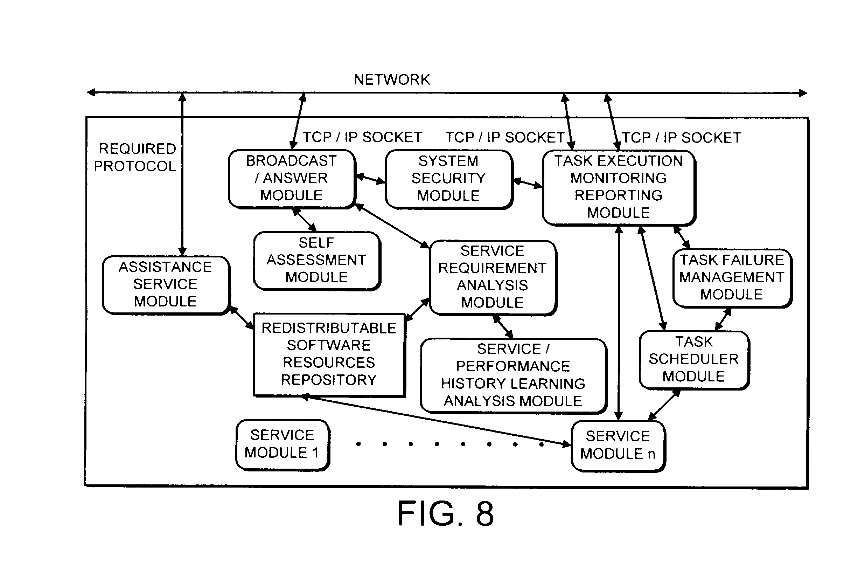

Figure 8 shows internal structure of a station. The internal structure is made up of a number of interconnected modules, each of which are now described in turn.

## 8.1. Broadcast/Answer Module

The Broadcast/Answer Module is the module to broadcast service requirements to the network. The requirement can be anything related to the task it is performing. For example, if a station wants to take on a task since it is the most suitable station to do the job, but found that there was a software module missing in its library, it could then broadcast the requirement for the piece of software.

The answering part of the module includes information about its self-assessment of performance if it takes on the task and some basic station based information such as CPU power, benchmark, free memory, total memory, current load of the machine, etc. Before answering any service requirements, security has to be checked to keep intruders away. Also, it has to check resources inside itself to make sure it can take on the task.

## 8.2. Self Assessment Module

The Self Assessment Module provides two kinds of self assessment or self evaluation, based on static and dynamic status.

The static status information includes:

(a) CPU model, number,
(b) Total memory,
(c) Total permanent storage,
(d) Byte Benchmark (Integer, memory, floating point),
(e) Operating System ID, version,
(f) Special hardware devices ID, version.

The dynamic status information includes:

(a) CPU load (current, last 1 minute, last 5 minutes, last 15 minutes).
(b) Network bandwidth (Mbit/Sec).
(c) Number of native Processes.
(d) Status of native Processes (Owner, CPU, Disk, RAM and Special hardware usage).
(e) Number of alien Processes.

(f) Status of alien Processes (Owner, CPU, Disk, RAM and Special hardware usage).

(g) Free available disk space of those Disk IDs.

(h) Total free RAM.

(i) Special Hardware status.

Static status takes relatively long time to complete. It needs to be done only once when the DAISP is up and running first time after a hardware update. It is then saved as a file which can be used when needed. Dynamic status has very short life time, i.e. it is out of date soon after it is obtained. It will be obtained periodically and dispatched if needed immediately.

8.3. System Security Module

The System Security Module guards a station running DAISP by every means. It can prevent answering malicious requirements and unreasonable task execution requirements. It can use encryption to protect the communication between stations. Normally, this is done on a trust basis. If a station is trusted in the DAISP, it will have the right to access whatever it can access under the operating system's discretion. For example, if a DAISP is run by a normal user (compared with privileged user), it will have access to the resources which a normal user can access. In the case of a normal UNIX box, it will have access to the user's own quota controlled harddisk, user ID priority governed CPU usage, etc. In a Microsoft NT environment, a normal user will have the right to access all shared hard disks on the network and user ID priority governed CPU usage. Care must be taken in the Microsoft case since a normal user has access to the network wide shared disks.

8.4. Task Execution, Monitoring, Reporting Module

The Task Execution, Monitoring, Reporting Module takes on a task and starts execution if necessary. It will broadcast status to the network. The purpose of doing this is that if the station fails in the middle of the execution, others will know about the task and its progress and take over. For example, if station a started a service and put up a message onto the network saying that "I am doing the task, it should finish by 21:10:35 and this information is updated at 21:10:10, and next update will be at 21:10:20", if it fails to update the message at 21:10:21, everybody on the network knows that something unexpected happened to a, then the capable station at the time can take on the task and inform the network about its action. This will guarantee the quality of the service.

8.5. Task Scheduler Module

The Task Scheduler Module maintains a tasks' and stations' priority scheme which governs the task execution priority in the station. It will monitor all tasks in the station including local tasks, which are the tasks initiated locally and foreign tasks, which are created by remote DAISP users. For example, if a local user starts a task, say Microsoft word, the Task scheduler module has to act quickly to suspend some of the foreign tasks in order to release enough resources, say CPU power, back to the local resources pool. It will guarantee that the local user will not be affected by any foreign tasks running in the machine. That will encourage users to participate the DAISP scheme.

8.6. Service Requirement Analysis Module

The Service Requirement Analysis Module does extra work after finishing a service and provides information about performance and possible improvement. It maintains the redistributable software resource repository inside of the station. For example, if a software module was not used for a long time, it can ask others to have it. If nobody wants it, it can put it into a software dump place. If it finds out there exists a new version of a software, it can update the software collection of the station by grabbing it through internet and let other station know it.

8.7. Service/Performance History Learning Analysis Module

The Service/Performance History Learning Analysis Module is concerned with the history of the station. Its main task is to optimise the station so that it can service the network better. It will try to find bottlenecks for different tasks and will bring these to the attention of the system administrators if it can not solve it itself.

8.8. Task Failure Management Module

The Task Failure Management Module deals with both failure of itself and other stations in the network. If it fails to do something, it will put a requirement up to the network for solution. If it found somebody else's failure such as mentioned in the "Task execution, monitoring, reporting module" section, it will see whether it can take on the task. If it can, it will broadcast the response and wait a while for answers. If nobody answers before timeout, it will start to continue the services.

8.9. Assistance Service Module

The Assistance Service Module works as a bridge to other modules, for example, as a intermediate delivery station for a long distance material transfer. Or, it can be treated as sub-service to other service stations.

8.10. Service Modules

The Service Modules are the modules that do the actual service jobs. they can be any services such as AI service for user habit catching, analysis and predicting, video streaming services, streaming convergence services, etc.. Certain service modules can be inside of "Redistributable software resource repository". They could be relocated to somewhere else in order to serve customers better.

9. Example System

The experimental system is based on the above described embodiment, but without the linguistic part of ELR. It runs on a Linux system and includes:

(1) A SQL server to contain all BARB database;
(2) A data extraction module to obtain and format subjects' data from the database for Fril modules;
(3) Fuzzy logic and ELR modules in Fril; and
(4) Learning and testing modules in Fril.

The learning and testing conditions are:

(1) All subjects are persons in BARB's data, who had a satellite receiver installed for at least a year;
(2) Altogether 45 Channels including satellite channels (only 5 channels for original pure logic system); and
(3) Altogether 108 program categories from BARB's program classification list.

The result of the experimented system is based on learning and testing of 660 subjects for 26 weeks. The execution time is less then 50 minutes on a dual Pentium II 350MHz PC. The procedure is: learning 1st week, predicting 2nd week, learning 2nd week, predicting 3rd week, learning 3rd week, predicting 4th week ... etc. The result of correct prediction ranging between 30% to 93% for individuals with average of more than 50%.

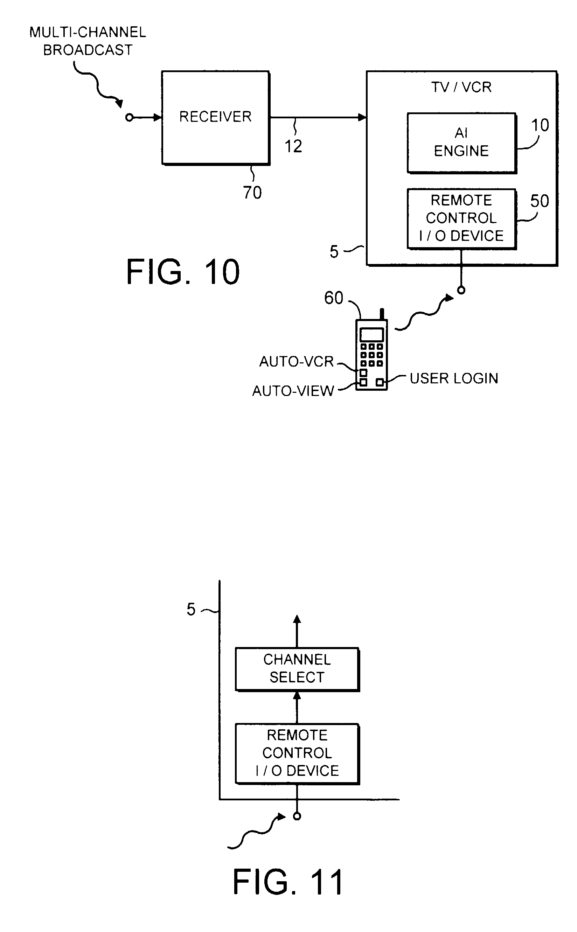

Figure 9 shows the averaged result for all subjects. It shows that after a week of learning, under the condition that in the 1st week the viewer had watched some programs which viewer was interested, the system can make fairly good prediction. Also, the accuracy has an increasing trend as more learning is carried out.

The prototype system is designed and implemented so that all users are assigned the same initial fuzzy sets for both ELRs (the given facts and the common sense facts) and weights associated with them. The on-line weights calculation is identical for all users.

10. Assessment of the Example System

Analysing the result of individuals shows that the system can predict with little error for those users who have a clear pattern to follow. Meanwhile, the system is not doing so well for those individual users without a clear viewing pattern.

In summary, a Distributed AI Service Provider (DAISP) based on the "Chorus" distributed system architecture and Linux operating system has been designed and implemented. It can be put on to one bootable floppy disk for machines which have sufficient memory to operate it. It can do distributed AI servicing without waste of hardware resources. Learning and predicting requirements from clients can be dealt with seamlessly, i.e. the DAISP provides a Plug-and-Play type of service. Testing has been done by using multiple PCs, such as dual Pentium II 400 with 256Mb RAM. The whole system functioned as expected and execution time for learning and predicting was nearly linearly reduced as more DAISPs were put into service.

The example system in ELR/Fril proves that fuzzy logic is an effective methodology for statistical problems with this kind of uncertainty. The result is encouraging. The speed is reasonable. With this kind of speed, on-line service is should be realisable.

The current example system can predict, with reasonable accuracy, what the user would like to watch given the history of the user's watching habits and available programs.

The DAISP provides a good solution for many networked applications, not just the present AI engine. The "Chorus" distributed system architecture can provide a more robust and reliable service in many areas.

### 11. Applications

### 11.1. TV/VCR Home System

Figure 10 shows a home system including a TV and video recorder (VCR) unit 5 arranged to receive a multi-channel TV signal 12 obtained from a receiver 70, such as a digital decoder or set-top box. The TV/VCR 5 includes an AI engine as described hereinabove and a remote control I/O device 50. The TV/VCR 5 operates in conjunction with a remote control unit 60 which includes dedicated buttons designated LOGIN, AUTO-VIEW and AUTO-VCR, or functional equivalents thereof. The LOGIN button is used for the user to provide his or her user i.d. to the system and the AUTO- buttons prompt further predictive functions that are now described.

Figure 11 shows a conventional operational mode in which TV channel selection in the TV/VCR 5 is made on the basis of a channel select signal received from the remote control unit 60.

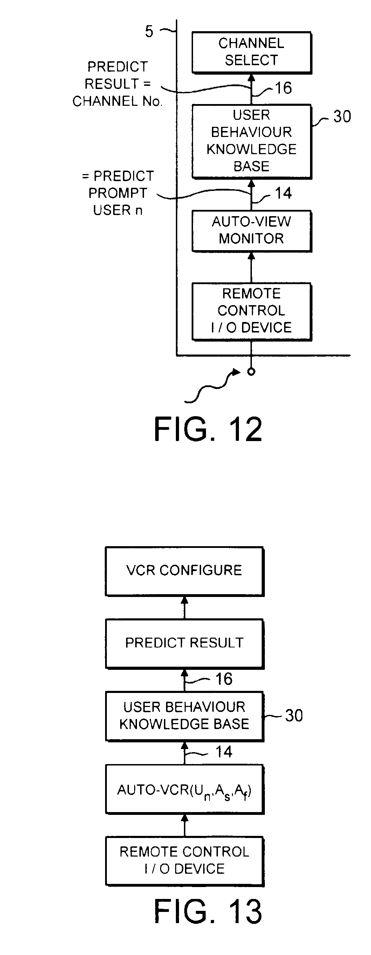

Figure 12 shows the AUTO-VIEW functionality in which the signal following from depression of the AUTO-VIEW button is recognised and, in response thereto, the user behaviour knowledge base 30 is prompted with a prompt signal 14. In turn, the user behaviour knowledge base 30 outputs a result 16 in the form of an automatic channel selection of the channel that the AI engine concludes the user concerned is most likely to want to watch among the available programs being broadcast on all the TV channels.

Figure 13 shows the AUTO-VCR mode. In this mode, the user identifies himself or herself and specifies a period of absence during which TV viewing will not be possible. The operands are thus user i.d. $U_n$, absence start time As and absence finish time $A_f$. The user behaviour knowledge base 30 is then prompted to predict from TV schedules a selection of programs to record over the period of absence. The TV schedules may be available already at the home system, or the AUTO-VCR command may itself prompt downloading of this information to the home system.

### 11.2. Virtual Record Store

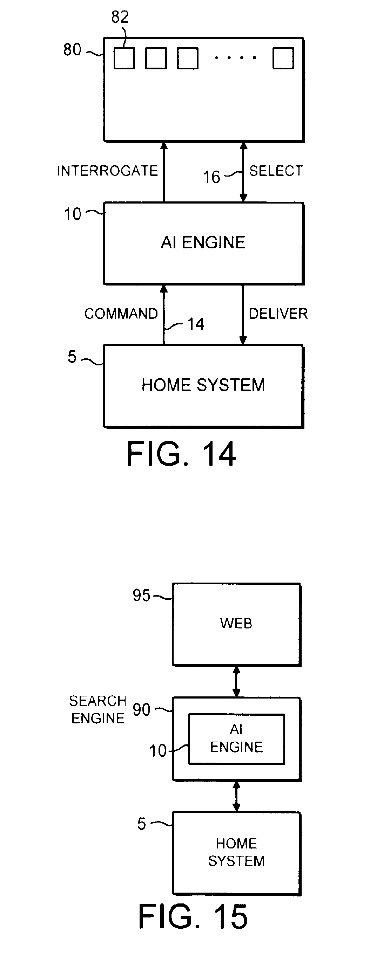

Figure 14 shows a virtual record store application. In this application, a remote server 80 stores a large number of data files in the form of digital audio files 82, e.g. albums. A home system network terminal 5 is used to command an AI engine 10 as hereinbefore described to select a music recording from the virtual record store server 80. The AI engine is preferably local to the home system network, locally storing the user's profile in respect of musical taste which may be built up, for example, from snooping a hifi-system networked to the home system. In addition, the user may further specify the selection to be made on a specific genre sub-set of the user's normal range of listening, thus allowing the user to buy a new dance album, or classical album, for example.

### 11.3. Web Browser

Figure 15 shows a web browser application. Here the AI engine 10 as hereinbefore described is incorporated in a search engine 90 to allow a home system user terminal 5 to find interesting new websites in the web 95 for a user based on an analysis of the attributes of existing favourites and other past behaviour.

### 11.4. Modelling of TV Scheduling

The AI engine of the TV/VCR home system application can also be used as the core of a TV scheduling modeller. In this application, a TV channel retains a database of user profiles which provide a comprehensive record of the viewing habits of a statistically valid group of viewers. The TV channel can then run a simulation of the effect of showing a dummy program schedule. For example, the task may be to decide when to show a new documentary series. There may be say four available time slots, each at different times of the day and different days of the week. Another example, would be to predict the effect of moving an established program to a later time or a different day. In this way, the optimum broadcast time can be determined on the basis of the predicted viewing figures. Moreover, within a fixed schedule, the TV channel can predict which *individuals* will be watching a particular show, and thus obtain a composite profile of the viewer groups who are predominantly watching the show, for example in terms of age, sex and social group. This information can be used better to target advertising content during the commercial breaks. A strength of the modelling is that it takes account of what programs rival TV channels will be showing at the same time, based on pre-existing knowledge of the future scheduling of the rival channels.

The embodiments described above may use dedicated hardware, programmable logic such as application specific integrated circuits (ASICs) or field programmable gate arrays (FPGAs), software or combinations of these. The software may be carried by a carrier medium such as a storage medium and/or a transmission medium.

**Claims**

1. A method of predicting user activity, the method comprising:

measuring a user activity to provide user activity data;
defining a plurality of given fact evidential logic rules with associated fuzzy sets and weights;
defining a plurality of common sense evidential logic rules with associated fuzzy sets and weights;
applying the common sense evidential logic rules to the user activity data to output common sense support values;
adjusting the fuzzy sets and/or the weights of the given fact evidential logic rules according to the common sense support values output from the common sense evidential logic rules; and
applying the given fact evidential logic rules to output given fact support values for predicting or selecting future user activity.

2. A method according to claim 1, wherein the given fact fuzzy sets are initialised with maximum entropy and the common sense fuzzy sets are initialised with semantic meaning.

3. A method according to claim 2, wherein the weights associated with the given fact fuzzy sets are continually recalculated according to entropy distribution, whereas the weights associated with the common sense fuzzy sets are kept fixed.

4. A method according to any one of the preceding claims, wherein the given fact evidential logic rules follow from facts directly inferable from the user activity data, whereas the common sense evidential logic rules are drawn from a secondary analysis of users' subjective attitude to the activity.

5. A method according to claim 5, wherein the secondary analysis includes at least one of the following: statistics, psychology, social behaviour and expert opinion.

6. A method according to claim 4 or 5, wherein at least one of the common sense evidential logic rules is a measure of users' current liking of the activity.

7. A method of user activity prediction substantially as hereinbefore described with reference to the accompanying drawings.

8. A system for automatically selecting among a plurality of alternative modes of an activity, the system comprising:

an activity monitor input for receiving activity data characteristic of the activity;
a user identifier input for defining which user is associated with current activity; and
a user behaviour knowledge base holding a number of user profiles, one for each registered user of the system, the user behaviour knowledge base comprising a plurality of given fact evidential logic rules with associated fuzzy sets and weights personalised to each user to form the user profiles, and being operable to select for any user one among the plurality of alternative modes of activity by applying the given fact evidential logic rules held in the user profile of that user.

9. A system according to claim 8, further comprising:

a common sense knowledge base comprising a plurality of common sense evidential logic rules with associated fuzzy sets and weights, the common sense evidential logic rules being operable in response to activity data and the user identifier to output common sense support values which, in use, are continually applied to modify the user profile of the currently active user by adjusting the fuzzy sets and/or the weights held in that user's profile for the given fact evidential logic rules, thereby to personalise the user profiles responsive to monitoring of each user's activity.

**10.** A system according to claim 9, wherein the common sense fuzzy sets and weights are generic to all users.

**11.** A system according to claim 9 or 10, wherein the common sense fuzzy sets and weights are fixed in use.

**12.** A device for automatically selecting among a plurality of alternative TV channels, the device comprising:

a program monitor input for receiving program data characteristic of the TV program;
a user identifier input by which a user can log on; and
a user behaviour knowledge base holding a number of user profiles, one for each registered user of the system, the user behaviour knowledge base comprising a plurality of given fact evidential logic rules with associated fuzzy sets and weights personalised to each user to form the user profiles, and being operable to select for any user one among the plurality of TV channels by applying the given fact evidential logic rules held in the user profile of that user.

**13.** A device according to claim 12, further comprising:
a common sense knowledge base comprising a plurality of common sense evidential logic rules with associated fuzzy sets and weights, the common sense evidential logic rules being operable in response to program data and the user identifier to output common sense support values which, in use, are continually applied to modify the user profile of the user who is logged on by adjusting the fuzzy sets and/or the weights held in that user's profile for the given fact evidential logic rules, thereby to personalise each user's profile by monitoring that user's activity.

**14.** A device according to claim 13, wherein at least one of the common sense evidential logic rules is a measure of users' current liking of the activity.

**15.** An audio visual reproduction system comprising a device for automatically selecting among a plurality of alternative TV channels according to any one of claims 12 to 14.

**16.** A device for automatically selecting among a plurality of alternative data files, the device comprising:

a monitor input for receiving attribute data characteristic of the data file;
a user identifier input by which a user can log on; and
a user behaviour knowledge base holding a number of user profiles, one for each registered user, the user behaviour knowledge base comprising a plurality of given fact evidential logic rules with associated fuzzy sets and weights personalised to each user to form the user profiles, and being operable to select for any user one among the plurality of alternative data files by applying the given fact evidential logic rules held in the user profile of that user.

**17.** A device according to claim 16, further comprising:
a common sense knowledge base comprising a plurality of common sense evidential logic rules with associated fuzzy sets and weights, the common sense evidential logic rules being operable in response to attribute data and the user identifier to output common sense support values which, in use, are continually applied to modify the user profile of the user who is logged on by adjusting the fuzzy sets and/or the weights held in that user's profile for the given fact evidential logic rules, thereby to personalise each user's profile by monitoring that user's activity.

**18.** A search engine comprising a device for automatically selecting among a plurality of alternative data files according to any one of claims 16 or 17.

**19.** A web browser comprising a device for automatically selecting among a plurality of alternative web sites according to any one of claims 16 or 17.

**20.** Computer software having a program code for carrying out a method according to any one of claims 1-7.

**21.** A carrier medium carrying computer software according to claim 20.

**22.** A carrier medium according to claim 21, the carrier medium being a storage medium.

**23.** A carrier medium according to claim 21, the carrier medium being a transmission medium.

FIG. 1

FIG. 2

MEMBERSHIP

1.0

0    0.1    0.5    0.9 1.0    1.5    2.0    $D_W / D_P$

FIG. 3

MEMBERSHIP

1.0

0                0.5                1.0    $K_{Ew=Ep}$

FIG. 4

MEMBERSHIP

1.0

0                0.5                1.0    $P_{Ew>Ep}$

FIG. 5

MEMBERSHIP

1.0

0                0.5                1.0    $K_{Ew<Ep}$

FIG. 6

FIG. 7

FIG. 9

NETWORK

TCP / IP SOCKET

TCP / IP SOCKET

TCP / IP SOCKET

TCP / IP SOCKET

REQUIRED PROTOCOL

ASSISTANCE SERVICE MODULE

BROADCAST / ANSWER MODULE

SYSTEM SECURITY MODULE

TASK EXECUTION MONITORING REPORTING MODULE

TASK FAILURE MANAGEMENT MODULE

TASK SCHEDULER MODULE

SELF ASSESSMENT MODULE

SERVICE REQUIREMENT ANALYSIS MODULE

REDISTRIBUTABLE SOFTWARE RESOURCES REPOSITORY

SERVICE / PERFORMANCE HISTORY LEARNING ANALYSIS MODULE

SERVICE MODULE n

SERVICE MODULE 1

FIG. 8

MULTI-CHANNEL
BROADCAST

RECEIVER

12

70

TV / VCR

AI
ENGINE    10

REMOTE
CONTROL    50
I / O DEVICE

5

60

AUTO-VCR

AUTO-VIEW

USER LOGIN

# FIG. 10

5

CHANNEL
SELECT

REMOTE
CONTROL
I / O DEVICE

# FIG. 11

5

CHANNEL
SELECT

PREDICT
RESULT =
CHANNEL No. ～16

USER
BEHAVIOUR
KNOWLEDGE
BASE ～30

= PREDICT
PROMPT
USER n ～14

AUTO-VIEW
MONITOR

REMOTE
CONTROL
I / O DEVICE

## FIG. 12

VCR CONFIGURE

PREDICT RESULT

～16

USER BEHAVIOUR
KNOWLEDGE BASE ～30

～14

AUTO-VCR($U_n$,$A_s$,$A_f$)

REMOTE CONTROL
I / O DEVICE

## FIG. 13

FIG. 14

FIG. 15